# EUROPEAN PATENT APPLICATION

(11) **EP 2 275 908 A1**
(43) Date of publication of application: **19.01.2011**
(21) Application number: 09015134.1
(22) Date of filing: 07.12.2009
(51) Int. Cl.: G06F 3/044, G06F 3/048

(54) **Touch-controlled apparatus and related control method**

(30) Priority: 14.07.2009 TW 98123701
(71) Applicant: HTC Corporation, Taoyuan County 330 (TW)
(72) Inventor: Li, Chih-Hung, Taoyuan City, Taoyuan County 330 (TW); Chen, Tsan-Yuan, Taoyuan City, Taoyuan County 330 (TW); Chin, Tung-Liang, Taoyuan City, Taoyuan County 330 (TW)
(74) Representative: Wagner, Karl H.

(57) **Abstract**

A touch-controlled electronic apparatus (100) includes a touch screen (130), and the touch screen (130) includes a first area (110) used as touch buttons and a second area (120) used for displaying images. A method for controlling the touch-controlled electronic apparatus (100) includes the steps of: detecting whether the touch screen (130) receives a touch signal (TU1); when detecting that the touch screen (130) receives the touch signal (TU1), determining whether a touched position (P1) of the touch signal (TU1) is located on the first area (110) to generate a determining result (DR1); and determining to trigger a first interrupt request (IR1) or a second interrupt request (IR2) according to the determining result (DR1).

## Description

The present invention relates to a touch-controlled electronic apparatus and a method capable of using a touch screen (e.g. a capacitive touch panel) as touch buttons according to the pre-characterizing clauses of claims 1, 4, 7, and 12.

In today's consumer electronics markets, portable electronic products such as personal digital assistants (PDAs), mobile phones, and PDA phones have already adopted a touch panel as their interface tool for data communication. Currently, the electronic products are usually designed with the trend of light weight and small size, and hence there is no enough space to accommodate conventional input devices such as keyboards or mice. Especially with the demands for human nature design in Tablet PCs, display devices equipped with a touch panel are becoming an important component of a variety of electronic products.

Nowadays electronic products (e. g. a mobile phone or a PDA phone) equipped with a touch panel usually adopt components such as metal dome keypads, hardwire switches, or resistive buttons to implement the common buttons of the mobile devices. However, these physical buttons will not only raise the cost but also occupy the circuit space, which results in a limitation to the size of the mobile devices.

This in mind, the present invention aims at providing a touch-controlled electronic apparatus and a related method for controlling a touch-controlled electronic apparatus.

This is achieved by a touch-controlled electronic apparatus and a related method for controlling a touch-controlled electronic apparatus according to claims 1, 4 , 7, and 12. The dependent claims pertain to corresponding further developments and improvements.

As will be seen more clearly from the detailed descriptions following below, the claimed method for controlling a touch-controlled electronic apparatus, which comprises a touch screen having a first area used as touch buttons and a second area used for displaying images, includes the steps of: detecting whether the touch screen receives a touch signal; when detecting that the touch screen receives the touch signal, determining whether a touched position of the touch signal is located on the first area to generate a determining result; and determining to trigger a first interrupt request or a second interrupt request according to the determining result. Herein the first area and the second area of the touch screen adopt an identical capacitive touch panel.

In addition, as will be seen more clearly from the detailed description following below, the claimed method for controlling a touch-controlled electronic apparatus, which comprises a touch screen having a first area used as touch buttons and a second area used for displaying images, includes the steps of: detecting whether the first area of the touch screen receives a touch signal and detecting whether the second area of the touch screen receives the touch signal to generate a detecting result; and determining to trigger a first interrupt request or a second interrupt request according to the detecting result. Herein the first area of the touch screen adopts a first capacitive touch panel, and the second area of the touch screen adopts a second capacitive touch panel.

In addition, as will be seen more clearly from the detailed description following below, the claimed touch-controlled electronic apparatus comprises a touch screen, a driving circuit, and a micro-processing unit. The touch screen has a first area used as touch buttons and a second area used for displaying images, wherein the first area and the second area of the touch screen adopt an identical capacitive touch panel. The driving circuit is coupled to the touch screen. The micro-processing unit is coupled to the driving circuit.

In addition, as will be seen more clearly from the detailed description following below, the claimed touch-controlled electronic apparatus comprises a touch screen, a driving circuit, and a micro-processing unit. The touch screen has a first area used as touch buttons and a second area used for displaying images, wherein the first area of the touch screen adopts a first capacitive touch panel and the second area of the touch screen adopts a second capacitive touch panel. The driving circuit is coupled to the touch screen. The micro-processing unit is coupled to the driving circuit.

In the following, the invention is further illustrated by way of example, tacking reference to the accompanying drawings. Thereof
FIG.1 is an appearance of a touch-controlled electronic apparatus according to a first embodiment of the present invention;
FIG.2 is a block diagram of the touch-controlled electronic apparatus shown in FIG.1;
FIG.3 is an appearance of a touch-controlled electronic apparatus according to a second embodiment of the present invention;
FIG.4 is a block diagram of the touch-controlled electronic apparatus shown in FIG.3;
FIG.5 is a flowchart illustrating a method for controlling a touch-controlled electronic apparatus according to a first exemplary embodiment of the present invention; and
FIG.6 is a flowchart illustrating a method for controlling a touch-controlled electronic apparatus according to a second exemplary embodiment of the present invention.

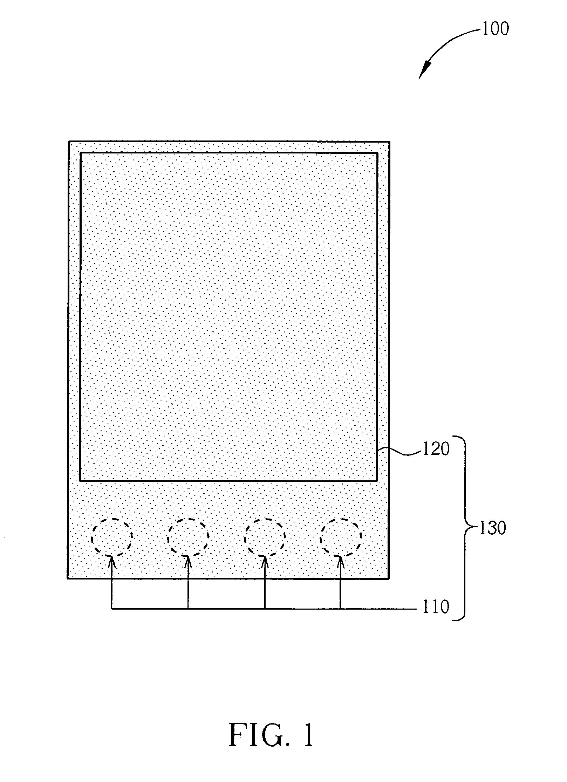

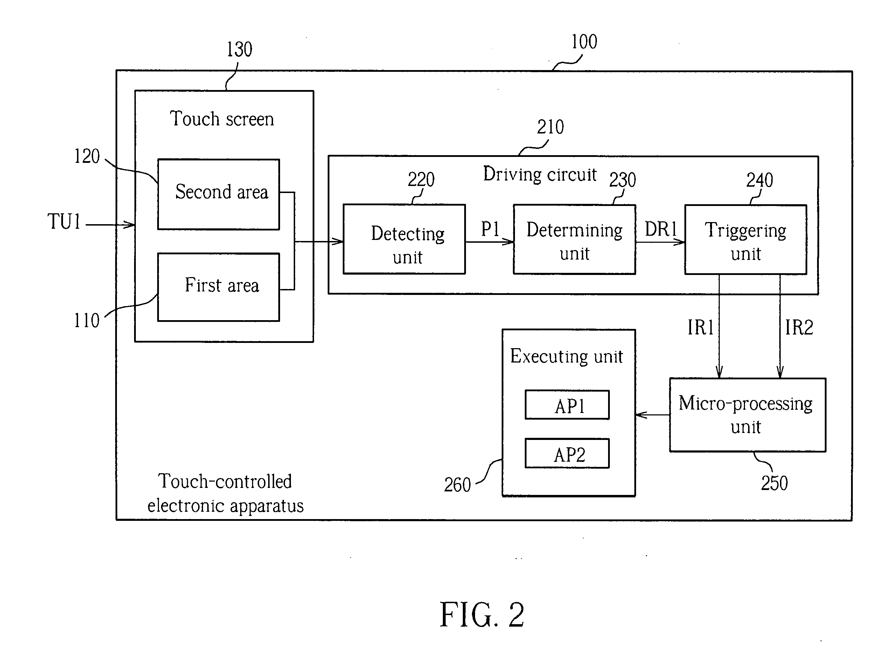

Please refer to FIG. 1 together with FIG. 2. FIG. 1 is an appearance of a touch-controlled electronic apparatus 100 according to a first embodiment of the present invention, and FIG.2 is a block diagram of the touch-controlled electronic apparatus 100 shown in FIG.1. As shown in FIG.1, the touch-controlled electronic apparatus 100 comprises a touch screen 130, and the touch screen 130 has a first area 110 and a second area 120. The first area 110 is used as (one or a plurality of) touch button (s), and the second area 120 is used for displaying images. Be noted that in this embodiment, the first area 110 and the second area 120 of the touch screen 130 adopt the same capacitive touch panel. That is, all positions located on the whole touch screen 130 can be used for sensing fingers.

As shown in FIG.2, the touch-controlled electronic apparatus 100 includes, but is not limited to, a touch screen 130, a driving circuit 210, a micro-processing unit 250, and an executing unit 260. The driving circuit 210 is coupled to the touch screen 130. The driving circuit 210 comprises a detecting unit 220, a determining unit 230, and a triggering unit 240. The detecting unit 220 is coupled to the touch screen 130 for detecting whether the touch screen 130 receives a touch signal TU1. The determining unit 230 is coupled to the detecting unit 220. When the detecting unit 220 detects that the touch screen 130 receives the touch signal TU1, the determining unit 230 further determines whether a touched position P1 of the touch signal TU1 is located on the first area 110 of the touch screen 130 to generate a determining result DR1. The triggering unit 240 is coupled to the determining unit 230 for determining to trigger a first interrupt request IR1 or a second interrupt request IR2 according to the determining result DR1. When the determining result DR1 of the determining unit 230 indicates that the touched position P1 of the touch signal TU1 is located on the first area 110, the triggering unit 240 triggers the first interrupt request IR1; and when the determining result DR1 of the determining unit 230 indicates that the touched position P1 of the touch signal TU1 is located on the second area 120, the triggering unit 240 triggers the second interrupt request IR2.

Furthermore, the micro-processing unit 250 is coupled to the triggering unit 240 of the driving circuit 210 for receiving the first interrupt request IR1 and the second interrupt request IR2. The executing unit 260 is coupled to the micro-processing unit 250. When the micro-processing unit 250 receives the first interrupt request IR1, the executing unit 260 performs a first designated application program AP1 corresponding to the touched position P1 of the touch signal TU1; and when the micro-processing unit 250 receives the second interrupt request IR2, the executing unit 260 performs a second designated application program AP2 corresponding to the touched position P1 of the touch signal TU1. Those skilled in the art should appreciate that various modifications of the first application program AP1 and the second application program AP2 may be made without departing from the spirit of the present invention, and they can be designed depending on actual demands.

Please note that the touch-controlled electronic apparatus 100 can be a handheld touch-controlled electronic apparatus, such as a personal digital assistant (PDA), a mobile phone or a PDA phone. But this should not be considered as limitations of the present invention, and the touch-controlled electronic apparatus 100 can be a touch-controlled electronic apparatus of other types. Moreover, in this embodiment, the first area 110 and the second area 120 of the touch screen 130 adopt the same capacitive touch panel, wherein the first area 110 is used as a touch button area and the second area 120 is used as an image-displaying area.

Please also note that the aforementioned detecting unit 220, the determining unit 230, and the triggering unit 240 can be implemented by software and/or firmware, but in no way should be considered to be limitations of the scope of the present invention. As one skilled in the art will readily appreciate that the detecting unit 220, the determining unit 230, and the triggering unit 240 can be implemented by other means or other components without departing the spirit of the present invention, which also belongs to the scope of the present invention.

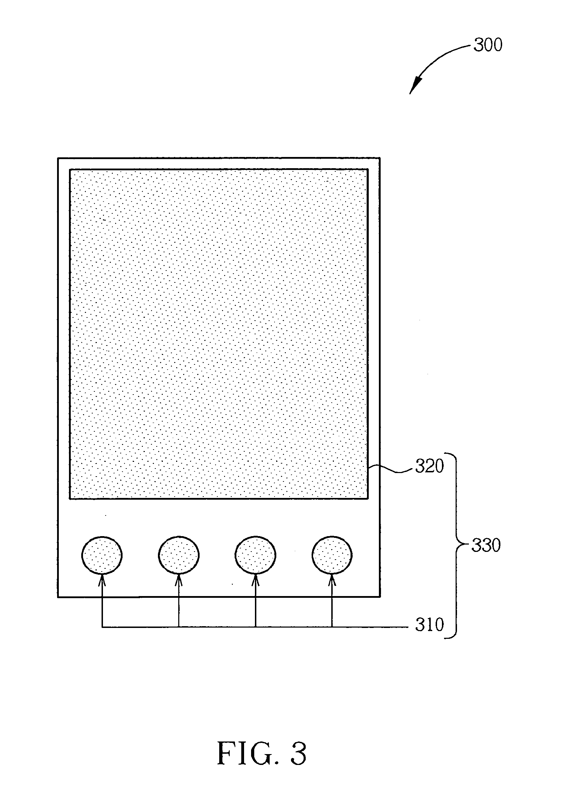

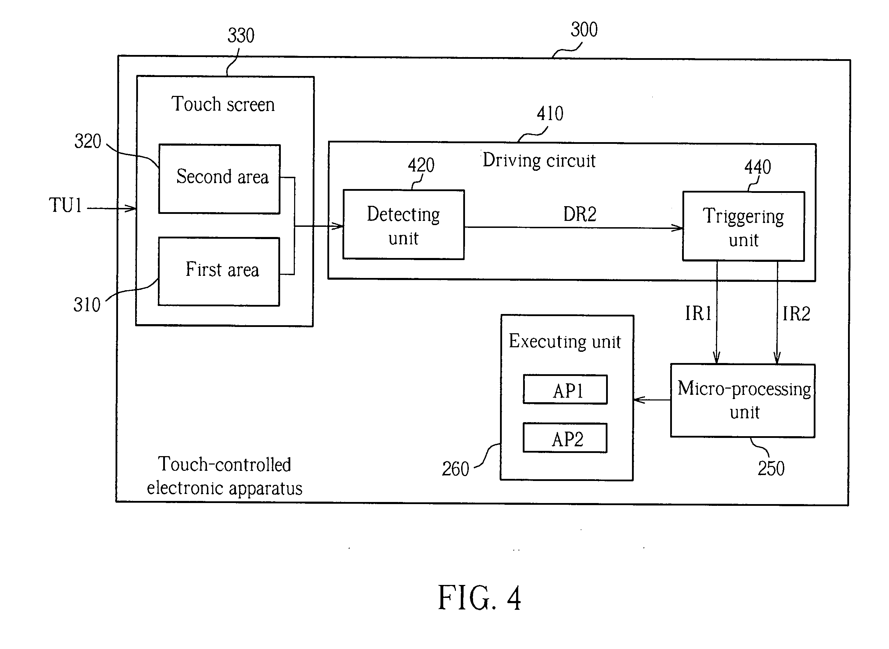

Please refer to FIG.3 together with FIG.4. FIG. 3 is an appearance of a touch-controlled electronic apparatus 300 according to a second embodiment of the present invention, and FIG.4 is a block diagram of the touch-controlled electronic apparatus 300 shown in FIG.3. As shown in FIG.3, the touch-controlled electronic apparatus 300 comprises a touch screen 330, and the touch screen 330 has a first area 310 and a second area 320. The first area 310 is used as (one or a plurality of) touch button (s), and the second area 320 is used for displaying images. Be noted that in this embodiment, the first area 310 and the second area 320 of the touch screen 330 adopt different capacitive touch panels. For example, the first area 310 adopts a first capacitive touch panel while the second area 320 adopts a second capacitive touch panel. That is, only the dotted portions located on the touch screen 330 can be used for sensing fingers.

As shown in FIG.4, the touch-controlled electronic apparatus 300 includes, but is not limited to, a touch screen 330, a driving circuit 410, a micro-processing unit 250, and an executing unit 260. The components in the second embodiment labeled with the same numbers as the components in the first embodiment represent that they have the same functions or corresponding locations. The driving circuit 410 is coupled to the touch screen 330. The driving circuit 410 comprises a detecting unit 420 and a triggering unit 440. The detecting unit 420 is coupled to the touch screen 330 for detecting whether the first area 310 of the touch screen 330 receives the touch signal TU1 and for detecting whether the second area 320 of the touch screen 330 receives the touch signal TU1 to generate a detecting result DR2. The triggering unit 440 is coupled to the detecting unit 420 for determining to trigger a first interrupt request IR1 or a second interrupt request IR2 according to the detecting result DR2. When the detecting result DR2 of the detecting unit 420 indicates that the first area 310 receives the touch signal TU1, the triggering unit 440 triggers the first interrupt request IR1; and when the detecting result DR2 of the detecting unit 420 indicates that the second area 320 receives the touch signal TU1, the triggering unit 440 triggers the second interrupt request IR2. Operations related to the micro-processing unit 250 and the executing unit 260 have already been detailed in FIG.2 above, and further description is omitted here for brevity.

When the touch-controlled electronic apparatus 300 is compared with the touch-controlled electronic apparatus 100 mentioned in the first embodiment, the implementation of the touch-controlled electronic apparatus 300 is more complicated than that of the touch-controlled electronic apparatus 100 because the first area 310 and the second area 320 of the touch screen 330 of the touch-controlled electronic apparatus 300 are implemented by adopting different capacitive touch panels. But the driving circuit 410 of the touch-controlled electronic apparatus 300 has a simpler firmware architecture and a faster processing speed because there is no need to determine the touched position P1 of the touch signal TU1.

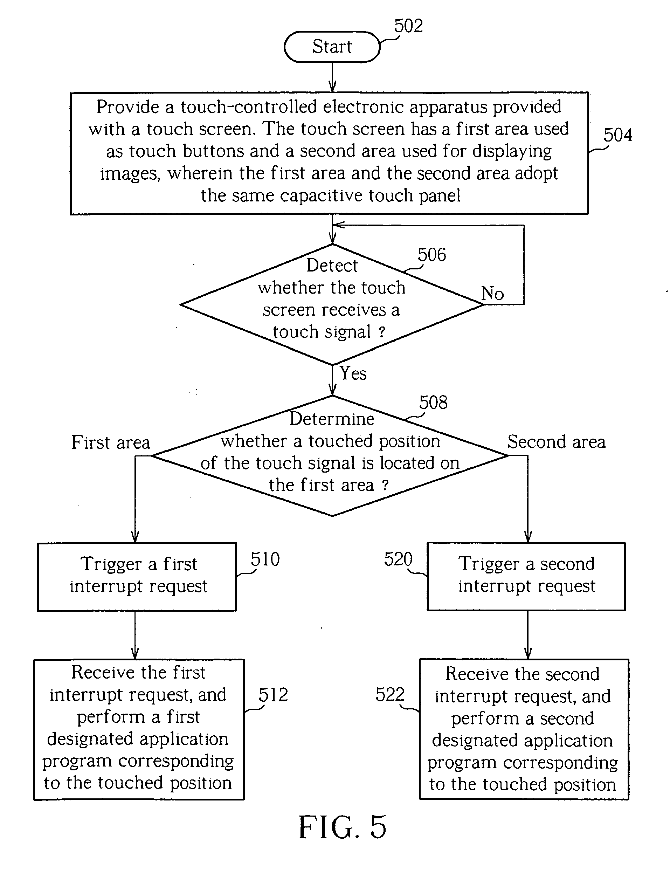

Please refer to FIG. 5. FIG. 5 is a flowchart illustrating a method for controlling a touch-controlled electronic apparatus according to a first exemplary embodiment of the present invention. Please note that the following steps are not limited to be performed according to the exact sequence shown in FIG. 5 if a roughly identical result can be obtained. The method includes, but is not limited to, the following steps:

| | |
|---|---|
| Step 502: | Start. |
| Step 504: | Provide a touch-controlled electronic apparatus provided with a touch screen. The touch screen has a first area used as touch buttons and a second area used for displaying images, wherein the first area and the second area adopt the same capacitive touch panel. |
| Step 506: | Detect whether the touch screen receives a touch signal. When detecting that the touch screen receives the touch signal, go to Step 508; otherwise, go back to Step 506. |
| Step 508: | Determine whether a touched position of the touch signal is located on the first area to generate a determining result. When the determining result indicates that the touched position is located on the first area, go to Step 510; and when the determining result indicates that the touched position is located on the second area, go to Step 520. |
| Step 510: | Trigger a first interrupt request. |
| Step 512: | Receive the first interrupt request, and perform a first designated application program corresponding to the touched position. |
| Step 520: | Trigger a second interrupt request. |
| Step 522 : | Receive the second interrupt request, and perform a second designated application program corresponding to the touched position. |

How each element operates can be known by collocating the steps shown in FIG.5 with the elements shown in FIG.1 and FIG.2, and further description is omitted here for brevity. Be noted that the step 506 is executed by the detecting unit 220, the step 508 is executed by the determining unit 230, the steps 510 and 520 are executed by the triggering unit 240, and the steps 512 and 522 are executed by the micro-processing unit 250 and the executing unit 260.

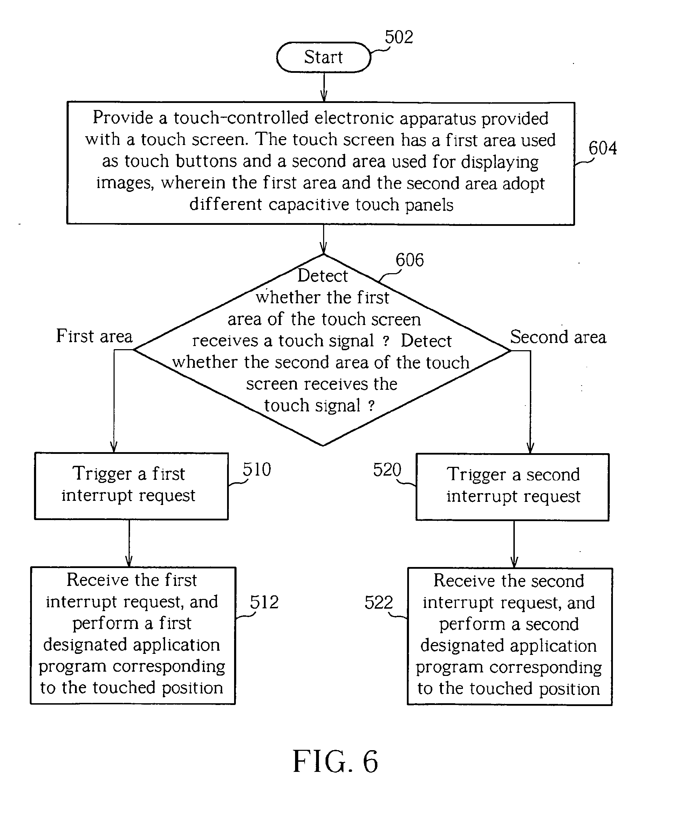

Please refer to FIG. 6. FIG. 6 is a flowchart illustrating a method for controlling a touch-controlled electronic apparatus according to a second exemplary embodiment of the present invention. The method includes, but is not limited to, the following steps:

| | |
|---|---|
| Step 502: | Start. |
| Step 604: | Provide a touch-controlled electronic apparatus provided with a touch screen. The touch screen has a first area used as touch buttons and a second area used for displaying images, wherein the first area and the second area adopt different capacitive touch panels. |
| Step 606: | Detect whether the first area of the touch screen receives a touch signal and detect whether the second area of the touch screen receives the touch signal to generate a detecting result. When the detecting result indicates that the first area receives the touch signal, go to Step 510; and when the detecting result indicates that the second area receives the touch signal, go to Step 520. |
| Step 510: | Trigger a first interrupt request. |
| Step 512: | Receive the first interrupt request, and perform a first designated application program corresponding to the touched position. |
| Step 520: | Trigger a second interrupt request. |
| Step 522: | Receive the second interrupt request, and perform a second designated application program corresponding to the touched position. |

Please note that the steps shown in FIG.6 are similar than the steps shown in FIG.5, which is a varied embodiment of FIG.5. The difference between them is that the step 604 in FIG.6 is used for replacing the step 504 in FIG.5, and the step 606 in FIG.6 is used for replacing the steps 506 and 508 in FIG.5. How each element operates can be known by collocating the steps shown in FIG.6 with the elements shown in FIG.3 and FIG.4, and further description is omitted here for brevity. The step 606 is executed by the detecting unit 420, the steps 510 and 520 are executed by the triggering unit 440, and the steps 512 and 522 are executed by the micro-processing unit 250 and the executing unit 260.

Please note that, the steps of the abovementioned flowcharts are merely practicable embodiments of the present invention, and in no way should be considered to be limitations of the scope of the present invention. The method can include other intermediate steps or several steps can be merged into a single step without departing from the spirit of the present invention.

The abovementioned embodiments are presented merely for describing features of the present invention, and in no way should be considered to be limitations of the scope of the present invention. In summary, the present invention provides a touch-controlled electronic apparatus (e.g. a mobile phone or a PDA) and a related control method. By making use of a touch screen (e.g. a capacitive touch panel) as touch buttons, common buttons which are traditionally implemented by components such as metal dome keypads, hardwire switches, or resistive buttons can be replaced. Therefore, not only can extra cost and circuit space be saved, but also an aesthetic goal can be achieved. The touch-controlled electronic apparatus can adopt the same capacitive touch panel to implement the first area and the second area of the touch screen (such as the first embodiment), or can adopt different capacitive touch panels to implement the first area and the second area of the touch screen (such as the second embodiment) . Both of them have advantages and disadvantages, and they are able to be applied to different applications depending on actual demands.

All combinations and sub-combinations of above-described features also belong to the invention.

## Claims

1. Amethod for controlling a touch-controlled electronic apparatus (100), the touch-controlled electronic apparatus (100) comprising a touch screen (130) having a first area (110) used as touch buttons and a second area (120) used for displaying images, and the first area (110) and the second area (120) of the touch screen (130) adopting an identical capacitive touch panel, the method comprising:
detecting whether the touch screen (130) receives a touch signal (TU1);
**characterized by**:
when detecting that the touch screen (130) receives the touch signal (TU1), determining whether a touched position (P1) of the touch signal (TU1) is located on the first area (110) to generate a determining result (DR1); and
determining to trigger a first interrupt request (IR1) or a second interrupt request (IR2) according to the determining result (DR1).

2. The method of claim 1, **characterized in that** the step of determining to trigger the first interrupt request (IR1) or the second interrupt request (IR2) according to the determining result (DR1) comprises:
when the determining result (DR1) indicates that the touched position (P1) is located on the first area (110), triggering the first interrupt request (IR1); and
when the determining result (DR1) indicates that the touched position (P1) is located on the second area (120), triggering the second interrupt request (IR2).

3. The method of claim 1, **characterized by**:
when the first interrupt request (IR1) is received, performing a first designated application program (AP1) corresponding to the touched position (P1); and
when the second interrupt request (IR2) is received, performing a second designated application program (AP2) corresponding to the touched position (P1).

4. A method for controlling a touch-controlled electronic apparatus (300), the touch-controlled electronic apparatus (300) comprising a touch screen (330) having a first area (310) used as touch buttons and a second area (320) used for displaying images, and the first area (310) of the touch screen (330) adopting a first capacitive touch panel and the second area (320) of the touch screen (330) adopting a second capacitive touch panel, the method **characterized by**:
detecting whether the first area (310) of the touch screen (330) receives a touch signal (TU1) and detecting whether the second area (320) of the touch screen (330) receives the touch signal (TU1) to generate a detecting result (DR2); and
determining to trigger a first interrupt request (IR1) or a second interrupt request (IR2) according to the detecting result (DR2).

5. The method of claim 4, **characterized in that** the step of determining to trigger the first interrupt request (IR1) or the second interrupt request (IR2) according to the detecting result (DR2) comprises:
when the detecting result (DR2) indicates that the first area (310) receives the touch signal (TU1), triggering the first interrupt request (IR1); and
when the detecting result (DR2) indicates that the second area (320) receives the touch signal (TU1), triggering the second interrupt request (IR2).

6. The method of claim 4, **characterized by**:
when the first interrupt request (IR1) is received, performing a first designated application program (AP1) corresponding to a touched position (P1) of the touch signal (TU1); and
when the second interrupt request (IR2) is received, performing a second designated application program (AP2) corresponding to the touched position (P1) of the touch signal (TU1).

7. A touch-controlled electronic apparatus (100), **characterized by**:
a touch screen (130), comprising:
a first area (110), used as touch buttons; and
a second area (120), used for displaying images, wherein the first area (110) and the second area (120) of the touch screen (130) adopt an identical capacitive touch panel;
a driving circuit (210), coupled to the touch screen (130); and
a micro-processing unit (250), coupled to the driving circuit (210).

8. The touch-controlled electronic apparatus (100) of claim 7, **characterized in that** the driving circuit (210) further comprises:
a detecting unit (220), for detecting whether the touch screen (130) receives a touch signal (TU1);
a determining unit (230), for determining whether a touched position (P1) of the touch signal (TU1) is located on the first area (110) to generate a determining result (DR1) when the detecting unit (220) detects that the touch screen (130) receives the touch signal (TU1); and
a triggering unit (240), for determining to trigger a first interrupt request (IR1) or a second interrupt request (IR2) according to the determining result (DR1) of the determining unit (230).

9. The touch-controlled electronic apparatus (100) of claim 8, **characterized in that** the micro-processing unit (250) is coupled to the triggering unit (240) of the driving circuit (210), for receiving the first interrupt request (IR1) and the second interrupt request (IR2).

10. The touch-controlled electronic apparatus (100) of claim 8, **characterized in that** when the determining result (DR1) of the determining unit (230) indicates that the touched position (P1) of the touch signal (TU1) is located on the first area (110), the triggering unit (240) triggers the first interrupt request (IR1) ; and when the determining result (DR1) of the determining unit (230) indicates that the touched position (P1) of the touch signal (TU1) is located on the second area (120), the triggering unit (240) triggers the second interrupt request (IR2).

11. The touch-controlled electronic apparatus (100) of claim 8, **characterized by**:
an executing unit (260), coupled to the micro-processing unit (250);
**characterized in that** when the micro-processing unit (250) receives the first interrupt request (IR1), the executing unit (260) performs a first designated application program (AP1) corresponding to the touched position (P1); and when the micro-processing unit (250) receives the second interrupt request (IR2), the executing unit (260) performs a second designated application program (AP2) corresponding to the touched position (P1).

12. A touch-controlled electronic apparatus (300), **characterized by:**
a touch screen (330), comprising:
a first area (310), used as touch buttons; and
a second area (320), used for displaying images, wherein the first area (310) of the touch screen (330) adopts a first capacitive touch panel and the second area (320) of the touch screen (330) adopts a second capacitive touch panel;
a driving circuit (410), coupled to the touch screen (330); and
a micro-processing unit (250), coupled to the driving circuit (410).

13. The touch-controlled electronic apparatus (300) of claim 12, **characterized in that** the driving circuit (410) further comprises:
a detecting unit (420), for detecting whether the first area (310) of the touch screen (330) receives a touch signal (TU1) and detecting whether the second area (320) of the touch screen (330) receives the touch signal (TU1) to generate a detecting result (DR2); and
a triggering unit (440), for determining to trigger a first interrupt request (IR1) or a second interrupt request (IR2) according to the detecting result (DR2) of the detecting unit (420).

14. The touch-controlled electronic apparatus (300) of claim 13, **characterized in that** the micro-processing unit (250) is coupled to the triggering unit (440) of the driving circuit (410), for receiving the first interrupt request (IR1) and the second interrupt request (IR2); and **characterized in that** when the detecting result (DR2) of the detecting unit (420) indicates that the first area (310) receives the touch signal (TU1), the triggering unit (440) triggers the first interrupt request (IR1) ; and when the detecting result (IR2) of the detecting unit (420) indicates that the second area (320) receives the touch signal (TU1), the triggering unit (440) triggers the second interrupt request (IR2).

15. The touch-controlled electronic apparatus (300) of claim 13, **characterized by**:
an executing unit (260), coupled to the micro-processing unit (250);
**characterized in that** when the micro-processing unit (250) receives the first interrupt request (IR1), the executing unit (260) performs a first designated application program (AP1) corresponding to the touched position (P1); and when the micro-processing unit (250) receives the second interrupt request (IR2), the executing unit (260) performs a second designated application program (AP2) corresponding to the touched position (P1).
